# EUROPÄISCHE PATENTSCHRIFT

(11) **EP 2 110 349 B1**
(45) Veröffentlichungstag und Bekanntmachung des Hinweises auf die Patenterteilung: **27.10.2010**
(21) Anmeldenummer: 09156357.7
(22) Anmeldetag: 26.03.2009
(51) Int. Cl.: B65G 57/32

(54) **Verfahren und Vorrichtung zum Stapeln verpackter Lebensmittelscheiben**
Method and device for stacking packaged food slices
Méthode et dispositif pour empiler des paquets d'aliments en tranche

(30) Priorität: 15.04.2008 DE 102008019028
(43) Veröffentlichungstag der Anmeldung: 21.10.2009
(73) Patentinhaber: Hochland Natec Gmbh, 88178 Heimenkirch (DE)
(72) Erfinder: Zeuschner, Roland, 88260 Argenbühl (DE); Biggel, Andreas, 88145 Hergatz (DE); Rupp, Ottmar, 88260 Argenbühl (DE)
(74) Vertreter: Braun-Dullaeus, Karl-Ulrich

(56) Entgegenhaltungen:
- EP-A- 0 654 407
- DE-A1- 3 642 123
- US-A- 4 450 949
- US-A- 6 098 782

## Beschreibung

Die Erfindung betrifft ein Verfahren zum Erzeugen von Packen eines in Scheiben vorliegenden Lebensmittels, insbesondere von Packen oder Paketen einzeln verpackter Schmelzkäsescheiben. Die Erfindung betrifft außerdem eine Vorrichtung zur Umsetzung des Verfahrens und die Packen selber.

Gerade aus dem Bereich der Schmelzkäseverarbeitung sind eine Vielzahl von Möglichkeiten zur Verpackung der einzelnen Scheiben bekannt. Um das Produkt attraktiv zu machen, sind bei den meisten Verpackungen die Scheiben für den Kunden von außen gut sichtbar. Generell lassen sich zwei Arten der Verpackung unterscheiden:
So ist es zum einen bekannt, einzelne Käsescheiben unmittelbar übereinander zu stapeln und solche Stapel aneinanderhaftender Käsescheiben in schalenartigen Behältnissen portioniert zu verpacken. Zur Vereinfachung des Herausnehmens solcher gemeinsam verpackter Scheiben werden diese mitunter etwas versetzt gestapelt. Bei der Herstellung und Verarbeitung werden die Stapel meist liegend auf Förderbändern transportiert.

Zum anderen werden Scheiben bekanntermaßen auch einzeln von Folie umgeben, wobei Stapel solcher individuell verpackter Scheiben zusätzlich von einer zusätzlichen, insbesondere folienartigen, Umverpackung umgeben sind. Im Gegensatz zu den oben genannten gemeinsam verpackten Scheiben werden die individuell verpackten Scheiben meist vertikal auf der Kante stehend und durch Bürstenbänder geführt weiterverarbeitet, insbesondere mit der Umverpackung versehen. Das Problem der liegenden Verarbeitung rührt daher, dass Stapel individuell verpackter Scheiben leicht verrutschen, wenn sie flächig übereinander liegen. Das macht die liegende Verarbeitung mitunter schwierig.

Beiden Verfahren ist jedoch gemeinsam, dass die damit erzeugten und verpackten Stapel jeweils nur aus Scheiben einer Sorte des jeweiligen Lebensmittels, insbesondere des Schmelzkäses, bestehen.

DE 3642123 offenbart ein Verfahren zum Ablegen scheibenförmigen Lebensmittelprodukten gemäß dem Oberbegriff des Anspruchs 1.

US 4450949 offenbart eine Vorrichtung zum Stapeln von Lebensmittelprodukten gemaß dem Oberbegriff des Anspruchs 5.

Aufgabe der vorliegenden Erfindung ist es nunmehr, ein mit technisch einfachen Mitteln zu realisierendes Verfahren und eine entsprechende Vorrichtung vorzuschlagen, mit der es möglich ist, Packen von Scheiben unterschiedlicher Art, insbesondere von Käsescheiben unterschiedlicher Rezeptur, in großer Menge und hoher Geschwindigkeit herzustellen.

Diese Aufgaben werden durch das Verfahren mit den kennzeichnenden Merkmalen des Anspruch 1 und die Vorrichtung nach Anspruch 5 gelöst. Besondere Ausführungsformen sind in den jeweiligen Unteransprüchen genannt.

Der Erfindung liegt zunächst der wesentliche Gedanke zu Grunde, dass der gemeinsame Gesamtpacken (nachfolgend auch "Paket" genannt) aus mindestens zwei gleichförmigen Einzelstapeln einzelner Scheiben (auch "Produktstapel") vereinigt wird, wobei die Einzelstapel jeweils mehrere, insbesondere etwa fünf, Einzelscheiben umfassen. Jeder der Einzelstapel wird jeweils liegend über eine eigene Zuführungsstrecke einer Vereinigungsstelle zugeführt, wo die Einzelstapel dann synchronisiert zu dem Gesamtpacken respektive dem Paket übereinandergeschichtet werden. Ganz besonders vorteilhaft lässt sich das Verfahren einsetzen, wenn die beiden Produktstapel einzeln verpackte Schmelzkäsescheiben von unterschiedlicher Rezeptur enthalten.

Dazu wird der erste Einzelstapel über eine erste Zuführungsstrecke und der zweite Einzelstapel über eine zweite Zuführungsstrecke mittels jeweils eines Transportmittels, das ein Förderband sein kann, mit Transportgeschwindigkeit transportiert. Die zunächst gegebenenfalls nebeneinander verlaufenden Zuführungsstrecken werden dann übereinander geführt und verlaufen letztendlich in einem Vereinigungsbereich parallel übereinander, bevor die obere

Zuführungsstrecke an einer eine Vereinigungsstelle definierenden Abrutschkante endet. Bevor der obere Einzelstapel über die Abrutschkante auf den darunter liegenden Einzelstapel abrutschen- kann, wird seine Bewegung mit der des unteren sich vorbei bewegenden Einzelstapels mit entsprechenden Mitteln synchronisiert, so dass sich die beiden Einzelstapel bündig zum Paket schichten.

Die wesentliche Funktionen der erfindungsgemäßen Vorgehensweise liegt somit in der positionsgerechten Stapelung zweier ankommender Einzelstapel übereinander zum Paket. Eine solche Zusammenführung zweier Einzelstapel kann mit kaskadierend hintereinander angeordneten Vorrichtungen wiederholt werden. Dabei können die Einzelstapel im Fall von Schmelzkäse in der Größenordnung zwischen 4 und 10 Einzelscheiben aufweisen. Ein besonderer Vorteil der Vorgehensweise liegt darin, dass mit großem Durchsatz ein für den Kunden attraktives Endprodukt mit zwei oder mehr Einzelstapeln verschiedener Sorte respektive verschiedener Rezeptur entsteht. Dabei sind auch unterschiedlich viele Scheiben pro Einzelstapel möglich. Die so zusammengestellten Packen der beiden vereinigten Einzelstapel können nachfolgend einer Verpackungsmaschine zugeführt werden, mit welcher der Packen eine zusätzliche verbraucherfreundliche Umverpackung erhält. Um dabei eine besonders sterile Verpackung zu gewährleisten ist es gerade Falle der Schmelzkäsescheiben besonders vorteilhaft, wenn die Umverpackung von einem hermetisch dicht versiegelten Folienschlauch gebildet wird. Mit der erfindungsgemäßen Vorgehensweise lassen sich problemlos bis zu 150 Gesamtpacken pro Minute erzeugen.

Die Synchronisation kann konstruktiv besonders einfach unterstützt werden, wenn Mitnahmemittel vorgesehen werden, die sich bezüglich der Transportrichtung von hinten an die zu vereinigenden Einzelstapel anlegen und diese mit einer Mitnahmegeschwindigkeit über die Vereinigungsstelle hinweg bewegen und damit die beiden Produktstapel also gewissermaßen aus den Zuführungsstrecken herausschieben. Um dieses zu bewerkstelligen ist es vorteilhaft, wenn die oberen Einzelstapel durch seitlich anliegende Bürstenbänder über ein als Rutschblech ausgebildetes Führungsblech geführt werden, das von unten von einem Mitnahmemittel durchgriffen wird.

Dieses Herausschieben oder "Herauskämmen" ist dann möglich, wenn die Geschwindigkeit des Mitnahmemittels größer als eine der beiden Transportgeschwindigkeiten, insbesondere größer als die des oberen Bürstenbandes, ist, wobei die Transportgeschwindigkeiten unterschiedlich sein können. Besonders einfach ist ein Mitnahmemittel zu realisieren, wenn es mit Mitnahmestegen ausgestattet ist, die etwa vertikal zur Transportrichtung durch die beiden übereinander liegenden Zuführungsstrecken hindurch greifen und sich von hinten an jeweils zwei Produktstapel anlegen. Auf diese Weise kann das bündige Aufeinanderschichten der Einzelstapel problemlos bewerkstelligt werden, wobei durch die anliegenden Mitnahmestege vermieden wird, dass die Einzelstapel sich gegenseitig verschieben.

In einer besonders zu bevorzugenden Ausführungsform wird die Abrutschkante von einem dünnen nach unten geneigten Rutschblech ausbildet. Das hat den Vorteil, dass das Rutschblech mit geringer Stärke ausgebildet werden kann und somit besonders nahe mit der Abrutschkante an die Oberfläche des auf der unteren Zuführungsstrecke transportierten Einzelstapels herangeführt werden kann. Auf diese Weise wird die für den freien Fall des oberen Einzelstapels mögliche Strecke minimiert, so dass dieser besonders laufruhig auf den unteren aufgelegt werden kann. Es kann zudem von Vorteil sein, das Rutschblech ähnlich einer Sprungschanze mit einem "Schanzentisch" zu versehen, um eine möglichst parallele Führung der beiden Einzelstapel zu erreichen. Um die Abrutschkante auch bei unterschiedlicher Höhe zu verarbeitender Einzelstapel in eine Position knapp oberhalb der Oberfläche des unteren Einzelstapels bringen zu können, ist es vorteilhaft wenn das Rutschblech verschwenkbar angebracht ist.

In einer besonders vorteilhaften Ausführungsform kann das Rutschblech derart weit nach oben verschwenkt werden, dass die Zuführung der Einzelstapel über die obere Zuführstrecke vollständig abgekoppelt werden kann. In dieser Betriebsart werden keine Packen erzeugt, sondern es werden lediglich Einzelstapel dem Mittel zur Umverpackung zugeführt. Eine solche Betriebsart ("Monobetrieb"), für die gegebenenfalls noch das für die Synchronisierung vorgesehene Stegriemenband gegen ein normales Förderband ausgetauscht werden muss, kann für zwischenzeitliche Umstellungen in der Produktion genutzt werden. Mit dem Verschwenken nach kann auch einen eventueller Produktstau behoben werden. Zudem trägt diese Möglichkeit zur Vermeidung von Unfällen bei.

Zur kontrollierten Abwärtsbewegung auf dem Rutschblech tragen die an den Seiten des Rutschbleches angeordneten und die Einzelstapel seitlich fassenden Bürstenbänder bei. Derartige Bürstenbänder sind an sich aus der Verarbeitung solcher Produktscheiben bekannt. Sie weisen an der Oberfläche eine Vielzahl abstehender Borsten auf, mit denen ein Produktstapel klemmend ergriffen werden kann. Die Bürstenbänder sind so angetrieben, dass sie den eingeklemmten Einzelstapel nach unten führen und ihn dann auf der Oberfläche des unteren Produktstapels ablegen. Das Bürstenband transportiert die Produktstapel vorteilhafterweise schräg nach unten auf ein als Mitnahmemittel dienendes und mit Mitnahmestegen ausgestattetes "Stegriemenband", welches das Rutschblech von unten durchdringt und den oberen Einzelstapel aus der Führung durch die Bürstenbänder "auskämmt".

Bei der erfindungsgemäßen Vorgehensweise werden die Einzelstapel dem Vereinigungsbereich über zwei unterschiedliche Transportbänder mit einer bestimmten Taktrate zugeführt. Wenn jedes der Transportbänder beispielsweise mit 30 m/min 125 Einzelstapel in der Minute fördert, besteht zwischen zwei Einzelstapeln, wenn diese eine Länge von 10 cm haben, jeweils ein Abstand von etwa 6 cm. Somit können zwei Einzelstapel um etwa 8 cm respektive um 0,15 Sekunden aus dem "Takt" geraten. Um derartige Unterschiede effektiv ausgleichen zu können, ist es vorteilhaft, kürzere Synchronisationsbänder vorzugehen, die aufliegend Einzelstapel entsprechend verzögern oder Beschleunigen können. Die Steuerung der Synchronisationsbänder kann dabei vermittels Lichtschranken erfolgen, mit denen die Position der vorbeigeführten Einzelstapel erkannt wird. Die Länge der Synchronisationsbänder, die in beiden Transportbändern vorgesehen werden können, bestimmt sich aus den oben genannten Parametern. Sie liegt bei etwa der doppelten Länge der zu verarbeitenden Einzelstapel. -

Da diese Synchronisation grundsätzlich von der Transportgeschwindigkeit der Transportbänder abhängt, ist es vorteilhaft, diese individuell flexibel einstellbar zu machen. So können am Einlauf beider Transportbänder die Einzelstapel gezählt werden, was die Ermittlung einer Grundgeschwindigkeit für die in ihrer Geschwindigkeit geregelten Transportbänder ermöglicht. Je nach Lage der Einzelstapel wird eine überlagerte Bewegung auf den Bändern ausgeführt.

Auf beiden Transportbänder kommen im Normalfall die Einzelstapel in gleicher Anzahl, so dass die Einzelstapel auf dem ersten und zweiten geregelten Band positionsgenau vorsynchronisiert werden können. Nach dem dritten geregelten Band wird in das Stegriemenband eingetaktet. Die Geschwindigkeit wird vorteilhafterweise so verändert, dass die Stapel immer in das Stegriemenband treffen.

Nachdem die Produktstapel zu dem Gesamtpacken zusammengeführt sind, werden diese über eine Auslaufstrecke abgeführt. Dabei ist es vorteilhaft, in der Auslaufstrecke ein Andruckmittel vorzusehen, das den Gesamtpacken mit geringer Kraft von oben beaufschlagt und damit etwas verhaftet. Diese verbesserte Haftung, welche die weitere Verarbeitung, insbesondere die Anbringung der Umverpackung, vereinfacht, rührt bei den einzeln verpackten Schmelzkäsescheiben durch eine geringe noch verbliebene Feuchtigkeit zwischen den Scheiben. Im einfachsten Falle kann das Andruckmittel eine angetriebene Andrückrolle aufweisen, welche die Gesamtpacken von oben mit der Schwerkraft der Rolle und eines Schwenkhebels zusammen drückt.

Weiterhin ist es vorteilhaft, im Auslauf eine Kontrolle der Höhe und der Länge der Gesamtpacken vorzusehen und den ermittelten Ausschuss über eine anschließende Station aus dem Prozess heraus zu führen. Ausgesonderte Gesamtpacken können gegebenenfalls manuell aufgeschichtet und dem Prozess wieder zurück geführt werden. Weiterhin kann sich im Auslauf eine Längenkontrolle und/oder eins Höhenkontrolle mit angeschlossener Ausscheideeinrichtung, beispielsweise in Form einer pneumatische Weiche, befinden. Wenn die Länge oder die Höhe der Gesamtpacken nicht in Ordnung ist, stößt die Ausscheideinrichtung auch einzelne Gesamtpacken aus. Generell können ausgeschiedene Gesamtpacken auf einen Puffertisch, einem breiten Band von etwa der 2 ½-flachen Produktbreite, über eine Weiche auf die Außenposition des Bandes geschoben und bei Bedarf vom Bedienpersonal gestapelt und wieder zugelegt werden

Nachfolgend wird die Erfindung anhand der Figuren 1 bis 3 näher erläutert. Es zeigen:
- **Figur 1**:: eine Vorrichtung zur Erzeugen von Packen in Draufsicht,
- **Figur 2**:: eine Vorrichtung zur Erzeugen von Packen in Ansicht und
- **Figur 3**:: den Vereinigungsbereich der Vorrichtung.

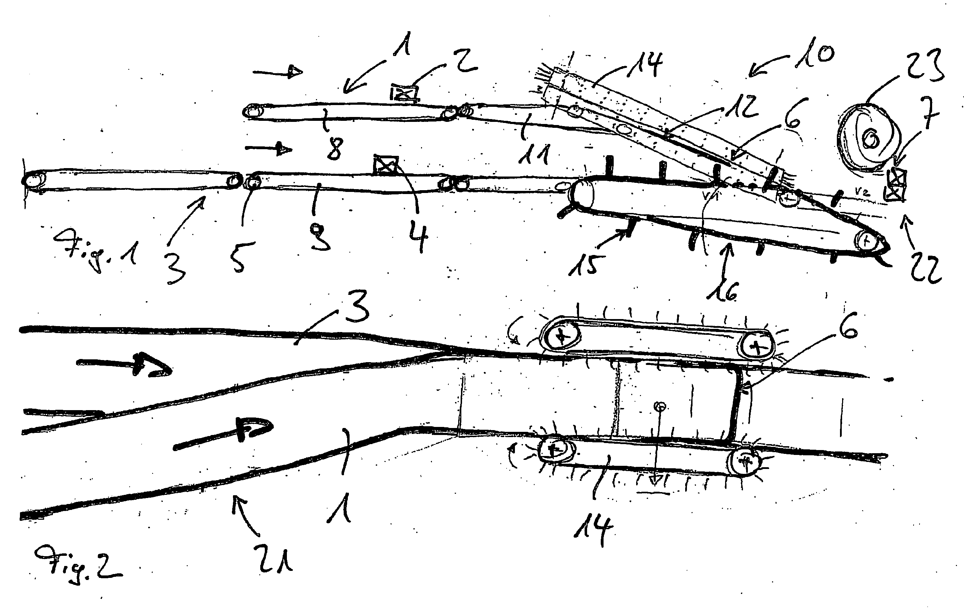

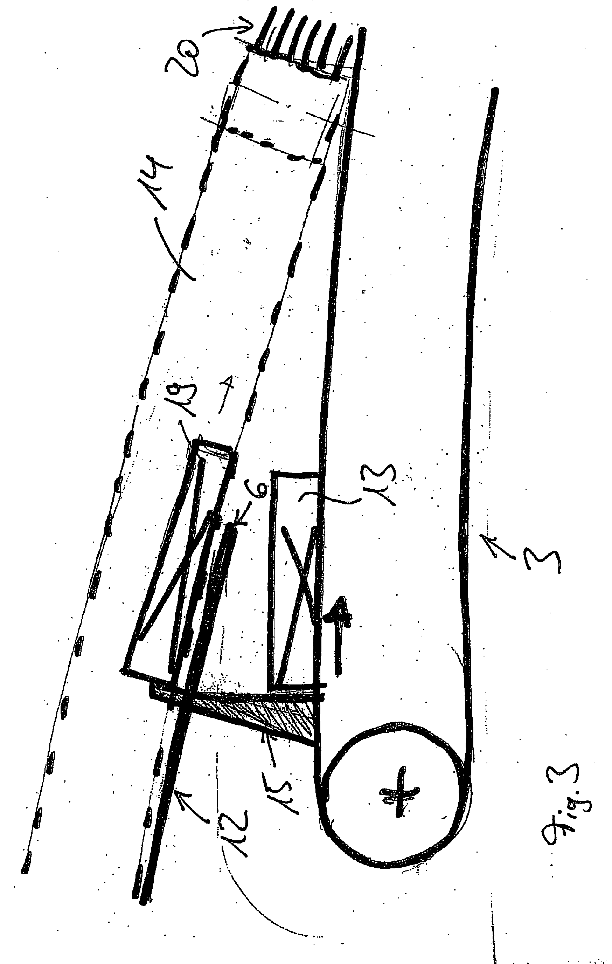

In Figur 1 ist zunächst eine Vorrichtung zur Erzeugen von Packen 7 in Draufsicht gezeigt. Diese hat eine erste obere Zuführungsstrecke 1 für den liegenden Transport eines ersten Produktstapels 2 und eine zweite untere Zuführungsstrecke 3 für den liegenden Transport des zweiten Produktstapels 4. Eventuell vorhandene Siegelnähte der Produktstapel 2 und 4 befinden sich rechts und links in Transportrichtung gesehen. Die Zuführungsstrecken 1 und 3 haben Transportbänder als Transportmittel, die den jeweiligen Produktstapel 2 und 4 mit einer Zuführungsgeschwindigkeit jeweils in Richtung des Pfeils bewegen. Die Transportbänder werden über getrennt ansteuerbare Antriebsrollen 5 gesteuert. Im Vereinigungsbereich sind die Transportbänder übereinander angeordnet, wobei die obere Zuführungsstrecke an einer Abrutschkante 6 endet (siehe auch Figur 3).

Für das bündige Auflegen des über die Abrutschkante 6 gelangenden Produktstapels 2 auf den Produktstapel 4 sind Mittel für die Synchronisation vorgesehen. Diese umfassen zum einen nicht dargestellte Lichtschranken, die erkennen ob und wann Produktstapel, auf den Zuführungsstrecken 1 und 3 vorbeigeführt werden. Mit der Information der Lichtschranken werden die als Synchronisationsbänder ausgebildeten Transportbänder 8 und 9 beschleunigt oder verzögert, damit die Produktstapel 2 grob synchronisiert in den Vereinigungsbereich 10 gelangen. Dabei sind jeweils oben und unten drei solcher Synchronisationsbänder a), b) und c) vorhanden.

Im Vereinigungsbereich 10 führt ein Transportband 11 über in ein nach unten geneigtes Rutschblech 12, das die Abrutschkante 6 ausbildet. Die Neigung des Rutschbleches 12 ist derart eingestellt, dass die Abrutschkante 6 bis knapp oberhalb der Oberfläche der auf der unteren Zuführungsstrecke transportierten Produktstapels 13 reicht (Figur 3). An den Seiten des Rutschbleches 12 sind beidseitig nach unten transportierende Bürstenbänder 14 angeordnet, die einen oben ankommenden Produktstapel zwischen den Borstenbündeln 20 klemmend ergreifen und nach unten über die Abrutschkante 6 führen.

In Figur 2 sind die Zuführungsstrecken 1 und 3 in der Draufsicht gezeigt. Vor dem Vereinigungsbereich 10 werden die obere Zuführungsstrecke 1 angehoben und in einer S-Kurve 21 über die untere Zuführungsstrecke 3 geführt. Vor der Abrutschkante 6 laufen beide Zuführungsstrecken dann exakt parallel.

Die Mittel zur Synchronisation weisen zudem eine Mitnahmevorrichtung auf, die als ein mit Mitnahmestegen 15 ausgestattetes endloses Stegriemenband 16 ausgebildet ist. Wie in Figur 3 ersichtlich, durchgreifen die Mitnahmestege 15 die beiden übereinander liegenden Zuführungsstrecken 17 und 18. Zu erkennen ist auch, dass sich der Mitnahmesteg 15 von hinten an beide Produktstapel, den unteren auf dem Transportband 3 aufliegenden Produktstapel 13, und den oberen zwischen den Bürstenbändern 14 geklemmten Produktstapel 19, legt und diese mit einer Mitnahmegeschwindigkeit, die größer oder zumindest gleich der größten Transportgeschwindigkeit ist, über die Abrutschkante schiebt und damit übereinander legt. Damit die Packungen an den "schiebenden" Mitnahmestegen anliegen, werden sie durch beidseitig seitlich angeordnete Leitbleche an die Stegriemen gedrückt. Das Bürstenband 14 transportiert den Einzelstapel 19 schräg nach unten auf das Stegriemenband. Die Mitnahmestege nehmen dann die komplette Packung mit. Um ein sicheres Anlegen des Mitnahmesteges 15 an den Einzeistapel 19 zu gewährleisten, läuft das Bürstenband 14 etwas langsamer als das untere Förderband 3.

Nach der Vereinigung ist eine Auslaufstrecke 22 zum Abführen der Gesamtpacken 7 vorgesehen, wobei in der Auslaufstrecke 22 eine angetriebene Andrückrolle 23 die Gesamtpacken 7 von oben insbesondere mit der Schwerkraft einer Rolle und eines Schwenkhebels zusammen drückt. Im Auslauf findet auch eine Kontrolle der Gesamtpacken 7 statt, wobei die Höhe mit einem Laser Sensor und die Länge mit Lichttastem untersucht wird. Die Rolle kann im Monobetrieb auch in einer oberen Position arretiert werden.

## Patentansprüche

1. Verfahren zum Erzeugen von Gesamtpacken (7) eines in Scheiben vorliegenden Lebensmittels, insbesondere einzeln verpackter Schmelzkäsescheiben, wobei
ein Gesamtpacken (7) aus zwei gleichförmigen Produktstapeln (2,4) von Scheiben vereinigt wird, wobei der erste Produktstapel (2) über eine erste Zuführungsstrecke (1) und der zweite Produktstapel (4) über eine zweite Zuführungsstrecke (3) jeweils liegend mittels eines Transportmittels mit Transportgeschwindigkeit transportiert wird, wobei die Zuführungsstrecken (1,3) in einem Vereinigungsbereich (10) parallel übereinander geführt werden, **dadurch gekennzeichnet, dass** die obere Zuführungsstrecke (1) an einer eine Vereinigungsstelle (10) definierenden Abrutschkante (6) endet, wobei Mittel zur Synchronisation so eingestellt werden, dass ein über die Abrutschkante (6) gelangender Produktstapel (2) bündig auf dem auf der unteren Zuführungsstrecke transportierten Produktstapel (4) aufgelegt wird.

2. Verfahren nach Anspruch 1,
**dadurch gekennzeichnet,**
**dass** die beiden Produktstapel (2,4) einzeln verpackter Schmelzkäsescheiben von unterschiedlicher Rezeptur enthalten.

3. Verfahren nach Anspruch 1 oder 2,
**dadurch gekennzeichnet,**
**dass** das Mittel zur Synchronisation ein Mitnahmemittel (15) aufweist, das sich bezüglich der Transportrichtung von hinten an die beiden zu vereinigenden Produktstapel (2,4) anlegt und mit einer Mitnahmegeschwindigkeit über die Vereinigungsstelle (10) hinweg bewegt, wobei die Mitnahmegeschwindigkeit größer als die, insbesondere durch ein Bürstenband (14) vorgegebene, Transportgeschwindigkeiten ist.

4. Verfahren nach einem der vorherigen Ansprüche,
**dadurch gekennzeichnet,**
**dass** der Gesamtpacken (7) der beiden vereinigten Produktstapel (2,4) mittels einer Umverpackung, insbesondere einem hermetisch dicht versiegelten Folienschlauch, verpackt werden.

5. Vorrichtung zur Erzeugen von Gesamtpacken (7) eines in Scheiben vorliegenden Lebensmittels, insbesondere zur Durchführung des Verfahrens nach einem der vorherigen Ansprüche, wobei ein Gesamtpacken mindestens zwei Produktstapel umfassend jeweils Scheiben unterschiedlicher Art aufweist, wobei
eine erste eigene Zuführungsstrecke (1) für den liegenden Transport des ersten Produktstapels (2) und eine zweite eigene Zuführungsstrecke (3) für den liegenden Transport des zweiten Produktstapels (4) vorgesehen sind, wobei jeder Zuführungsstrecke (1,3) ein Transportmittel zugeordnet ist, das den jeweiligen Produktstapel (2,4) mit einer Zuführungsgeschwindigkeit bewegt, wobei die beiden Zuführungsstrecken (1,3) in einem Vereinigungsbereich (10) übereinander angeordnet sind, wobei die obere Zuführungsstrecke (1) im Vereinigungsbereich (10) an einer Abrutschkante (6) endet, wobei Mittel zur Synchronisation vorgesehen sind, die das bündige Aufeinanderschichten eines mittels des Transportmittels über die Abrutschkante (6) transportierten Produktstapels auf dem auf der unteren Zuführungsstrecke (3) transportierten Produktstapel bewerkstelligen, wobei ein nach unten geneigtes Rutschblech (12) die Abrutschkante (6) ausbildet, die knapp oberhalb der Oberfläche der auf der unteren Zuführungsstrecke (3) transportierten Produktstapel (4) angeordnet ist, **dadurch gekennzeichnet, daß**
an den Seiten des Rutschbleches nach unten transportierende Transportbänder ("Bürstenbänder") (14) vorgesehen sind, deren Oberflächen mit einer Vielzahl abstehender Borstenbündel (20) versehen sind, wobei die Bürstenbänder (14) einen Produktstapel zwischen den Borstenbündeln klemmend ergreifen und nach unten führen.

6. Vorrichtung nach Anspruch 5,
**dadurch gekennzeichnet,**
**dass** das Rutschblech (12) insbesondere auch zum Stillegen der oberen Zuführungsstrecke (1) nach oben verschwenkbar ist.

7. Vorrichtung nach einem der Ansprüche 5 bis 6,
**dadurch gekennzeichnet,**
**dass** die Mittel zur Synchronisation eine Mitnahmevorrichtung aufweisen, die ein die beiden übereinander liegenden Zuführungsstrecken durchgreifendes und mit einer Mitnahmegeschwindigkeit bewegtes Mitnahmemittel, insbesondere einen Mitnahmesteg (15), umfasst.

8. Vorrichtung nach Anspruch 7,
**dadurch gekennzeichnet,**
**dass** die Mitnahmegeschwindigkeit größer oder zumindest gleich der größten Transportgeschwindigkeit ist, wobei sich das Mitnahmemittel (15) von hinten an beide Produktstapel (2,4) anlegt und diese über die Abrutschkante (6) hinweg führt.

9. Vorrichtung nach einem der Ansprüche 5 bis 8,
**dadurch gekennzeichnet,**
**dass** die Mittel zur Synchronisation Lichtschranken zur Erkennung vorbeigeführter Produktstapel und Synchronisationsbänder zur Beschleunigung oder Verzögerung der vorbeigeführten Produktstapel aufweisen.

10. Vorrichtung nach einem der Ansprüche 5 bis 9,
**gekennzeichnet durch**
eine Auslaufstrecke (22), zum Abführen der Gesamtpacken (7), wobei in der Auslaufstrecke (22) eine angetriebene Andrückrolle (23) die Gesamtpacken (7) von oben insbesondere mit der Schwerkraft einer Rolle und eines Schwenkhebels zusammen drückt.

## Claims

1. Method for producing multipacks (7) of a food which is present in slices, in particular individually packed processed cheese slices, wherein
a multipack (7) is combined of two uniform product stacks (2, 4) of slices, wherein the first product stack (2) is transported over a first feed line (1) and the second product stack (4) is transported over a second feed line (3) in each case in a lying position by means of a transporting means at a transporting speed, wherein the feed lines (1, 3) are routed in parallel one above the other in a combining region (10), **characterised in that** the upper feed line (1) ends at a sliding edge (6) which defines a combination point (10), wherein means for synchronisation are set in such a manner that a product stack (2) which travels over the sliding edge (6) is placed flush on the product stack (4) which is transported on the lower feed line.

2. Method according to Claim 1,
**characterised in that**
the two product stacks (2, 4) contain individually packed processed cheese slices of different recipes.

3. Method according to Claim 1 or 2,
**characterised in that**
the means for synchronisation has an entrainment means (15) which is applied to the two product stacks (2, 4) to be combined from the rear with respect to the transporting direction and moves beyond the combination point (10) at an entrainment speed, wherein the entrainment speed is greater than the transporting speeds which are in particular predefined by a brush belt (14).

4. Method according to one of the preceding claims, **characterised in that**
the multipack (7) of the two combined product stacks (2, 4) is packed by means of an outer packaging, in particular a hermetically sealed foil tube.

5. Device for producing multipacks (7) of a food which is present in slices, in particular for carrying out the method according to one of the preceding claims, wherein a multipack has at least two product stacks comprising in each case slices of different types, wherein
a first dedicated feed line (1) is provided for transporting the first product stack (2) in a lying position, and a second dedicated feed line (3) is provided for transporting the second product stack (4) in a lying position, wherein each feed line (1, 3) is assigned a transporting means which moves the respective product stack (2, 4) at a feed speed, wherein the two feed lines (1, 3) are arranged one above the other in a combination region (10), wherein the upper feed line (1) ends at a sliding edge (6) in the combination region (10), wherein means for synchronisation are provided, which effect the flush layering of a product stack which is transported over the sliding edge (6) by means of the transporting means on the product stack which is transported on the lower feed line (3), wherein a sliding plate (12) which is inclined downwards forms the sliding edge (6) which is arranged just above the surface of the product stack (4) which is transported on the lower feed line (3), **characterised in that** downwardly transporting transporting belts ("brush belts") (14) are provided at the sides of the sliding plate, the surfaces of which transporting belts are provided with a multiplicity of projecting bundles of bristles (20), wherein the brush belts (14) grip a product stack between the bundles of bristles in a clamping manner and guide them downwards.

6. Device according to Claim 5,
**characterised in that**
the sliding plate (12) can be pivoted upwards, in particular to bring the upper feed line (1) to a stop.

7. Device according to one of Claims 5 to 6, **characterised in that**
the means for synchronisation have an entrainment device which comprises an entrainment means, in particular an entrainment web (15), which engages through the two feed lines, which lie one above the other, and is moved at an entrainment speed.

8. Device according to Claim 7,
**characterised in that**
the entrainment speed is greater than or at least equal to the greatest transporting speed, wherein the entrainment means (15) is applied to both product stacks (2, 4) from behind and guides them over the sliding edge (6).

9. Device according to one of Claims 5 to 8, **characterised in that**
the means for synchronisation have light barriers for detecting product stacks being guided past and synchronisation belts for accelerating or delaying the product stacks being guided past.

10. Device according to one of Claims 5 to 9, **characterised by**
an exit line (22) for guiding away the multipacks (7), wherein a driven pressure roller (23) in the exit line (22) compresses the multipacks (7) from above, in particular with the gravity of a roller and of a pivoting lever.

## Revendications

1. Procédé de production de paquets complets (7) d'un produit alimentaire présenté en tranches, en particulier de tranches de fromage fondu emballées individuellement, dans lequel un paquet complet (7) est unifié à partir de deux piles de produit de forme égale de tranches (2, 4), sachant que la première pile de produit (2) est transportée sur un premier trajet d'alimentation (1) et la deuxième pile de produit (4) est transportée sur un deuxième trajet d'alimentation (3) respectivement à plat via un moyen de transport avec une vitesse de transport, sachant que les trajets d'alimentation (1, 3) sont dirigés parallèlement l'un au-dessus de l'autre dans une zone de regroupement (10), **caractérisé en ce que** le trajet d'alimentation supérieur (1) termine sur une arête de glissement (6) définissant un point de regroupement (10), sachant que des moyens de synchronisation sont ainsi réglés qu'une pile de produit (2) arrivant au-dessus de l'arête de glissement (6) est placée en affleurement sur la pile de produit (4) transportée sur le trajet d'alimentation inférieur.

2. Procédé selon la revendication 1, **caractérisé en ce que** les deux piles de produit (2, 4) contiennent des tranches de fromage fondu emballées individuellement de recettes différentes.

3. Procédé selon la revendication 1 ou 2, **caractérisé en ce que** le moyen de synchronisation présente un moyen d'entraînement (15) qui s'appuie sur les deux piles de produit (2, 4) à réunir par l'arrière par rapport au sens de transport et se déplace par-dessus le point de regroupement (10) avec une vitesse d'entraînement, sachant que la vitesse d'entraînement est supérieure aux vitesses de transport prédéfinies, en particulier par une bande à brosse (14).

4. Procédé selon l'une des revendications précédentes, **caractérisé en ce que** le paquet complet (7) des deux piles de produits (2, 4) réunies est conditionné au moyen d'un emballage, en particulier d'un tube de film scellé hermétiquement.

5. Dispositif pour produire des paquets complets (7) d'un produit alimentaire présenté en tranches, en particulier pour exécuter le procédé selon l'une des revendications précédentes, dans lequel un paquet complet présente au moins deux piles de produit comprenant des tranches respectives de types différents, sachant qu'un premier trajet d'alimentation (1) propre pour le transport à plat de la première pile de produit (2) et un deuxième trajet d'alimentation (3) propre pour le transport à plat de la deuxième pile de produit (4) sont prévus, sachant que chaque trajet d'alimentation (1, 3) a un moyen de transport qui déplace la pile de produit (2, 4) respective avec une vitesse de transport, sachant que les deux trajets d'alimentation (1, 3) sont placés l'un au-dessus de l'autre dans une zone de regroupement (10), sachant que le trajet d'alimentation supérieur (1) termine sur une arête de glissement (6) dans la zone de regroupement (10), sachant que des moyens de synchronisation sont prévus qui effectuent le placement en couches en affleurement d'une pile de produit transportée par le moyen de transport sur l'arête de glissement (6) sur la pile de produit transportée sur le trajet d'alimentation inférieur (3), sachant qu'une tôle à glisser (12) inclinée vers le bas forme l'arête de glissement (6) qui est placée juste au-dessus de la surface de la pile de produit (4) transportée sur le trajet d'alimentation inférieur (3), **caractérisé en ce que** sur les côtés de la tôle à glisser, des bandes de transport (« bandes à brosse ») (14) transportant vers le bas sont prévues, dont les surfaces sont munies d'une pluralité de paquets de brosses (20), sachant que les bandes à brosse (14) serrent une pile de produit en prise entre les paquets de brosse et la conduisent vers le bas.

6. Dispositif selon la revendication 5, **caractérisé en ce que** la tôle à glisser (12) peut être basculée vers le haut en particulier aussi pour arrêter le trajet d'alimentation supérieur (1).

7. Dispositif selon l'une des revendications 5 à 6, **caractérisé en ce que** les moyens de synchronisation présentent un dispositif d'entraînement qui comprend un moyen d'entraînement, en particulier une traverse d'entraînement (15), traversant les deux trajets d'alimentation placés l'un au-dessus de l'autre et déplacé avec une vitesse d'entraînement.

8. Dispositif selon la revendication 7, **caractérisé en ce que** la vitesse d' entraînement est supérieure ou au moins égale à la vitesse de transport la plus élevée, sachant que le moyen d'entraînement (15) s'appuie par l'arrière sur les deux piles de produit (2, 4) et les dirige au-dessus de l'arête de glissement (6).

9. Dispositif selon l'une des revendications 5 à 8, **caractérisé en ce que** les moyens de synchronisation présentent des cellules photoélectriques pour détecter la pile de produit qui passe et des bandes de synchronisation pour accélérer ou retarder la pile de produit qui passe.

10. Dispositif selon l'une des revendications 5 à 9, **caractérisé par** un trajet de sortie (22) pour éloigner les paquets complets (7), sachant que dans le trajet de sortie (22), un rouleau de compression (23) entraîné comprime les paquets complets (7) par le haut, en particulier avec la pesanteur d'un rouleau et d'un levier de bascule.
